# EUROPÄISCHE PATENTSCHRIFT

(11) **EP 1 116 617 B1**
(45) Veröffentlichungstag und Bekanntmachung des Hinweises auf die Patenterteilung: **05.04.2006**
(21) Anmeldenummer: 00122937.6
(22) Anmeldetag: 21.10.2000
(51) Int. Cl.: B60H 3/06, B01D 53/00

(54) **Desorbierbares Sorptionsfilter, insbesondere für eine Heizung- oder Klimaanlage eines Kraftfahrzeuges**
Desorbable sorbent filter, in particular for a heating or air-conditionning system in a vehicle
Filtre adsorbant désorbable, notamment pour une installation de chauffage ou climatisation de véhicule automobile

(30) Priorität: 13.01.2000 DE 10001043
(43) Veröffentlichungstag der Anmeldung: 18.07.2001
(73) Patentinhaber: Behr GmbH & Co. KG, 70469 Stuttgart (DE)
(72) Erfinder: Angermann, Hans-H., Dr.rer.nat., 70197 Stuttgart (DE); Damsohn, Herbert, Dr.-Ing., 73773 Aichwald (DE); Rinckleb, Tilo, 71732 Tamm (DE); Burk, Roland, Dipl.-Phys., 70469 Stuttgart (DE); Luz, Klaus, Dipl.-Ing., 71083 Herrenberg (DE)

(56) Entgegenhaltungen:
- DE-A- 1 536 802
- DE-A- 4 040 104
- DE-A- 19 517 016
- DE-A- 19 805 011
- US-A- 3 252 580
- US-A- 5 827 355

## Beschreibung

Die Erfindung betrifft ein desorbierbares Sorptionsfilter, insbesondere für eine Heizungs- oder Klimaanlage eines Kraftfahrzeuges gemäß dem Oberbegriff des Anspruchs 1 sowie ein Verfahren zur Herstellung des Sorptionsfilters. Ein gattungsgemäßes Filter ist in der DE4040104 offenbart.

Eine Kraftfahrzeug-Klimaanlage dient heute unter anderem der Erhöhung des Komforts bezüglich Lufttemperatur, Luftfeuchte und Luftqualität. Neben den Funktionen Belüftung, Heizung und Kühlung des Fahrgastraumes ist die Befreiung der Luft von festen und gasförmigen Geruchs-, Reiz- und Schadstoffen sowie Luftfeuchtigkeit eine wichtige Aufgabe, die nicht nur den Komfort, sondern auch die Fahrsicherheit und Gesundheit der Insassen beeinflußt.

Für die Luftreinigung werden Partikelfilter für die festen Bestandteile und Sorptionsfilter, beispielsweise Aktivkohlefilter für die Abscheidung von unerwünschten Gasen eingesetzt.

Es sind mit Aktivkohle beladene Polyurethan-Schaumfilter bekannt, die als reine Verbrauchsfilter regelmäßig gewechselt werden müssen, um eine ausreichende Filterwirkung langfristig aufrechtzuerhalten. Sie müssen daher an einer leicht zugänglichen Stelle innerhalb der Klimaanlage angeordnet sein. Zudem genügen diese Filter nicht dem sich abzeichnenden Trend zu wartungsfreien Fahrzeugen und Ressourcenschonung. Die Überschreitung der Wartungsintervalle ist gesundheitlich bedenklich.

Deshalb wurden desorbierbare Filterkonzepte vorgeschlagen, mit denen prinzipiell die Filterstandzeit erheblich verlängert werden kann, so daß ein Lebenszeitfilter, also ein Filter, das über die Lebensdauer eines Kraftfahrzeuges nicht ausgetauscht werden muß, darstellbar ist. Hierzu muß die Filterstruktur in gewissen Zeitabständen zur Austreibung der adsorbierten Schadstoffe auf Temperaturen um ca. 200°C erhitzt werden. Dazu werden heute im wesentlichen drei Wege verfolgt, die alle jedoch unterschiedliche Nachteile besitzen.

Aus der DE 43 04 077 und der DE 195 12 844 sind Filter bekannt, die indirekt mittels Heißluft desorbiert werden können. Der zur Desorption benötigte Energieverbrauch durch die Erhitzung großer Luftmengen ist jedoch untragbar hoch. Außerdem findet durch die Heißluft eine große Verschleppung von Wärme statt, wodurch größere Anlagenbereiche temperaturbeständig ausgeführt werden müssen.

Weiter sind Aktivkohlefilter bekannt, bei denen die Aktivkohle direkt durch Stromfluß beheizt werden kann. Diese direkt aufheizbaren Aktivkohlegewebefilter sind heute sehr teuer und schwer zu konfektionieren. Außerdem ist die mechanische Stabilität im Betrieb gering. Dies kann zwar durch Aufbau eines Laminats bestehend aus Aktivkohlegewebe, Stützgewebe und/oder - vlies verbessert werden, jedoch erhöht dies die Kosten und den Durchströmungswiderstand. Zudem ist die dauerhaft gute elektrische Kontaktierung des Gewebes an metallische Stromzuführleitungen sehr problematisch. Weiterhin kann sich der elektrische Widerstand im Laufe der Zeit durch Oxidation erhöhen, wodurch sich Inhomogenitäten in der Stromdichteverteilung ergeben können, so dass die Temperaturüberwachung schwieriger wird und die Gefahr der "hotspot"-Bildung steigt. Ein weiterer Nachteil ist die relativ geringe Kohlemenge dünner Gewebe, die geringe Strömungsgeschwindigkeiten und relativ kurze Adsorptions-/Desorptionszyklen erfordern. Hohe Gaskonzentrationen können die geringe Kohlemenge u.U. zu schnell sättigen, wodurch die Filterleistung einbrechen kann. Dies wirkt sich, z.B. bei auftretenden geruchsintensiven Schadstoffspitzen, wie sie im Straßenverkehr häufig vorkommen, komfortmindernd aus.

Schließlich sind beispielsweise aus der DE 42 25 272 A1 und der DE 195 17 016 A1 Sorptionsfilter bekannt, bei denen ein Kohlegranulat mittels Spezialkleber auf elektrisch beheizbare Metallträgerstrukturen aufgebracht ist. In der DE 42 25 272 A1 ist ein Adsorptionsfilter beschrieben, das aus einer zwei- oder dreidimensionalen Trägerstruktur und daran fixierten Adsorberkörnern besteht. Diese Trägerstruktur besteht aus einem elektrisch leitfähigen Material und wird durch Stromdurchfluß aufgeheizt. Auf diese Weise kann eine Desorption des Adsorbermaterials erfolgen. Die DE 195 17 016 A1 beschreibt eine Luftaufbereitungsanlage, insbesondere für einen Fahrzeuginnenraum, mit zumindest zwei Aktivkohlefiltereinheiten, von denen alternierend jeweils eine elektrisch beheizt wird und durch einen Abluftstrom die Schadstoffe fortgetragen werden. Gleichzeitig wird über die andere Filtereinheit der zu behandelnde Luftstrom geführt, der schließlich dem Fahrzeuginnenraum zugeleitet wird. Die Aktivkohlefiltereinheiten weisen metallische, luftumströmte Trägerkörper auf, die mit Aktivkohle beschichtet sind. Dabei sind die metallischen Trägerkörper als elektrische Heizwiderstände ausgebildet, so daß bei Stromdurchfluß eine ausreichende Erwärmung zur Desorption der Aktivkohle erzeugt wird.

Derartige Sorptionsfilter, deren Kohle mittels bestrombarer Metallträger aufheizbar ist, lassen sich zwar kostengünstiger herstellen und können einfacher in eine geometrisch stabile, plissierte Form gebracht werden, haben aber den Nachteil, daß die üblicherweise durch spezielle Beschichtungsverfahren aufgebrachte Granulatkohle bei den aufgebrachten geringen Kohlemengen eine zu geringe Adsorptionskinetik aufweisen und damit zu einem hohen Sofortdurchbruch führen. Grund hierfür sind die langen Diffusionswege der zu adsorbierenden Gase hin zu den im Innern der Granulatkörner liegenden Mikroporen und die großen Luftzwischenräume zwischen den einzelnen Aktivkohlepartikeln. Außerdem ist die Haftung der einzelnen Kohlepartikel auf den Trägern mittels eines Klebers bei hohen Desorptionstemperaturen um 200°C häufig unzureichend. Grundsätzlich ist der Einsatz eines Klebers auch deshalb problematisch, da entweder beim Beschichtungsvorgang oder beim Aufheizvorgang auf Temperaturen um ca. 200°C Fremdstoffe aus dem Kleber ausdampfen können und die Aktivkohle irreversibel kontaminieren können. Auch treten im Betrieb Probleme bei der Wärmeisolation der Partikel und bei der Langzeitstabilität der Haftung der Partikel auf.

Ausgehend von diesem Stand der Technik ist es Aufgabe der Erfindung, ein verbessertes, direkt aufheizbares Sorptionsfilter bereitzustellen, das insbesondere eine kostengünstige Herstellung, eine gute elektrische Kontaktierung ermöglicht, eine gute Adsorptionskinetik aufweist, wobei auf Klebesysteme ganz verzichtet werden soll.

Diese Aufgabe wird gelöst durch ein gattungsgemäßes Sorptionsfilter mit den kennzeichnenden Merkmalen des Anspruchs 1 sowie ein Verfahren mit den Merkmalen des Anspruchs 13.

Das erfindungsgemäße Sorptionsfilter weist einen metallischen Träger, der durch Stromfluß aufheizbar ist und einen auf den Träger aufgebrachten Adsorber auf, wobei der Adsorber flächig ausgebildet ist und mit dem Träger über an dem Träger angeordnete Halteelemente mechanisch verbunden ist.

Die Möglichkeit, ein flächiges Adsorbermaterial einsetzen zu können, erlaubt durch seinen moderaten Preis eine besonders kostengünstige Herstellung eines regenerativen Filters. Es kann eine relativ große Menge adsorptionsfähigen Materials, beispielsweise Aktivkohle, mit größerer primärer Oberfläche und kurzen Diffusionswegen untergebracht werden als in bekannten Filtern mit Granulatkohle, wodurch sehr geringe Durchbruchswerte erreichbar sind. Eventuell schleichende Oxidation und Veränderung des elektrischen Widerstandes des Adsorbers kann wegen der indirekten Heizung über den metallischen Träger nicht zu Problemen mit der Temperaturregelung oder gar zu "hotspots" führen. Das erfindungsgemäße Filter läßt sich in kostengünstiger Weise in einer automatischen Fertigung herstellen. Es läßt sich zunächst als Meterware fertigen und dann auf die gewünschten Größen konfektionieren und falls gewünscht, auch plissieren. Auf Klebstoffe kann vollständig verzichtet werden. Die das Adsorbermaterial haltenden Halteelemente begünstigen durch ihre Wärmeleitung ein schnelles Erreichen der Desorptionstemperatur. Das schwierige elektrische Kontaktierproblem mittels elektrischer Leiter entfällt. Die mechanische Stabiblität des Filters im Betrieb ist gegeben. Eine Temperaturregelung des Filters in der Desorptionsphase ist mit einfachen, an den metallischen Träger wärmeleitend angebrachten Kontaktfühlern möglich und zuverlässig.

Vorteilhafte Ausgestaltungen der Erfindung sind Gegenstand der abhängigen Ansprüche.

Als Träger wird bevorzugt ein gitterförmiger, metallischer Träger, insbesondere ein Streckgitter, eingesetzt. Streckgitter sind gängig und in fast beliebigen Maschenparametern herstellbar. Der Einsatz von Streckgittern in desorbierbaren Filtern ist Gegenstand der älteren deutschen Patentanmeldung DE 198 05 011, auf die hiermit Bezug genomen wird und deren Inhalt, insbesondere bezüglich des Streckmetalls und seiner Ausgestaltungen, in der vorliegenden Beschreibung durch diese Bezugnahme enthalten sein soll.

Alternativ könnte als Träger auch ein Lochblech, ein Drahtgitter, ein Drahtgestrick oder dergleichen, eingesetzt sein.

Die Halteelemente sind bevorzugt aus dem Trägermaterial selbst gebildet, beispielsweise durch Stanzen und/oder Umformen, indem beispielsweise Knotenpunkte des Gitters ausgestanzt werden und freie, durch das Ausstanzen enstandene Enden des Trägermaterials zur Bildung der Halteelemente umgebogen werden, so dass sie wie Stacheln aus dem Trägergitter hervorstehen. Beim Auflegen des Adsorbers auf den Träger dringen die Stacheln in den Adsorber ein. Durch anschließendes Umformen der Stacheln, indem beispielsweise der Träger mit dem aufgelegten Adsorber durch Walzen miteinander verpresst werden und die sich umbiegenden Stacheln sich mit dem Adsorber verkrallen, wird der Adsorber fest mit dem Träger verbunden.

Ein Adsorber, der als Adsorberfaserverbund, beispielsweise Aktivkohlegewebe, -gestrick, -filz oder -vlies, ausgebildet ist, ist sehr kostengünstig herstellbar und bietet eine sehr große primäre Oberfläche mit kurzen Transportwegen für die Schadstoffe zu den sorptionsaktiven Mikroporen. Dies ergibt eine schnelle Adsorptionskinetik und geringe Durchbruchswerte.

Wenn der Sorptionsfilter zusätzlich eine den Adsorber abdeckende, ebenfalls mechanisch mit dem Träger verbundene Schicht aufweist, kann das Eindringen von abgelösten Fasern des Adsorbers in den Fahrzeuginnenraum verhindert werden. Die zusätzliche Deckschicht kann in dem Herstellungsprozess zusammen mit dem Adsorber mit dem Träger verbunden werden.

Gegebenenfalls kann das erfindungsgemäße Sorptionsfilter mehrschichtig aufgebaut sein, wobei Träger und Adsorberschichten abwechselnd angeordnet sind.

Im folgenden wird die Erfindung anhand von Ausführungsbeispielen unter Bezugnahme auf die Zeichnung im einzelnen erläutert.

In der Zeichnung zeigen:
- **Fig. 1**: eine perspektivische Ansicht eines metallischen Trägers des erfindungsgemäßen Sorptionsfilters;
- **Fig. 2**: einen Querschnitt des erfindungsgemäßen Filters;
- **Fig. 3**: eine Ausführungsform des Trägers;
- **Fig. 4**: einen Querschnitt einer Ausführungsform des erfindungsgemäßen Filters mit einem Träger aus Fig. 3;

Ein erfindungsgemäßes Filter 10, das insbesondere zum Filtern von Luft zum Einsatz in einer Heizungs- oder Klimaanlage eines Kraftfahrzeuges geeignet ist, weist einen metallischen Träger 12, der durch Stromfluß aufheizbar ist und einen auf den Träger 12 aufgebrachten Adsorber 14 auf.

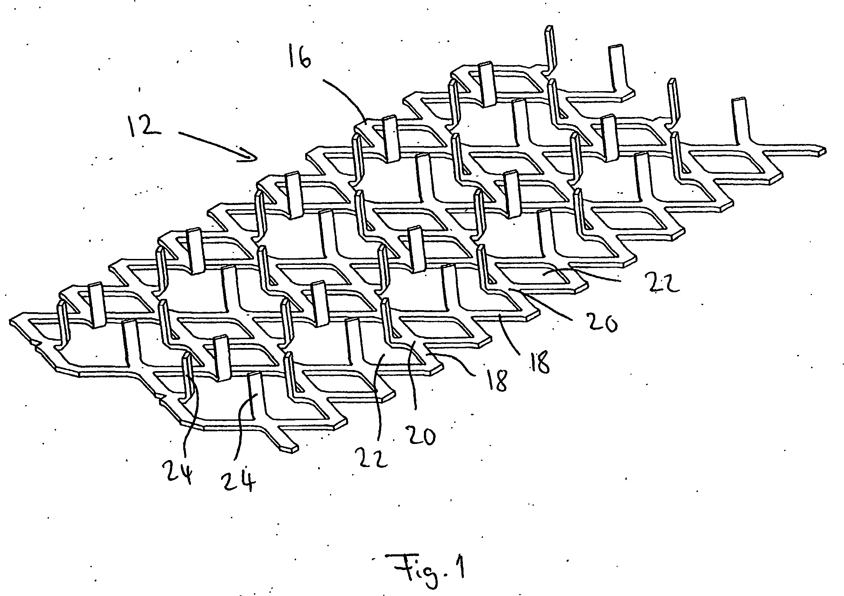

In Fig. 1 ist eine erste Ausführungsform des metallischen Trägers 12 dargestellt, wobei der Träger 12 aus einem Streckmetallgitter 16 besteht, das eine Vielzahl von maschenartigen Gitterstegen 18 umfasst, die sich an Knotenpunkten 20 schneiden und zwischen denen Öffnungen 22 ausgebildet sind. Dieses Streckmetallgitter 16 dient als Trägerstruktur für den Adsorber 14.

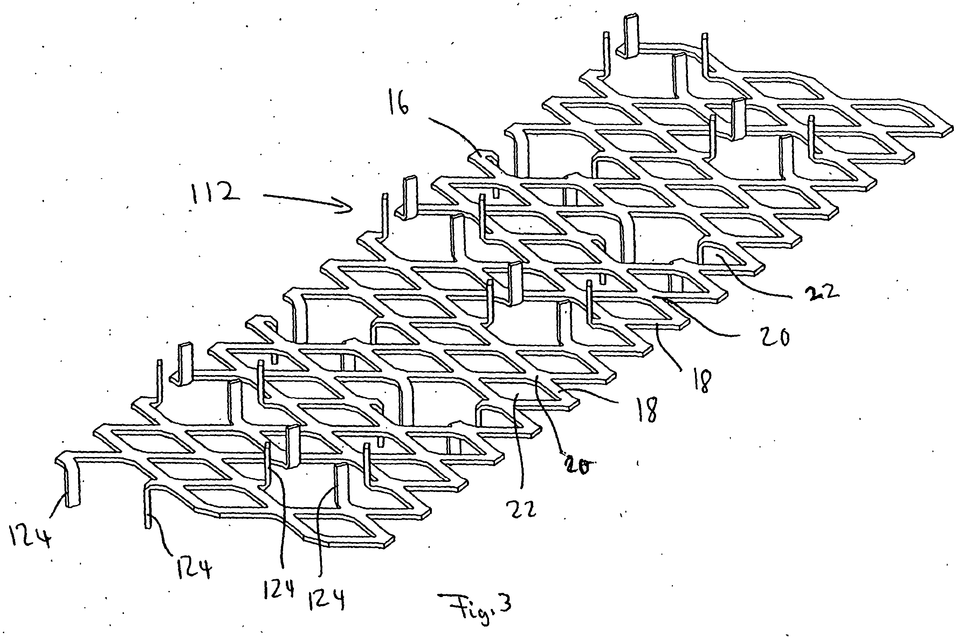

Einige der Knotenpunkte 20 sind ausgestanzt und durch das Ausstanzen entstehende freie Enden 24 der Gitterstege 18 sind in etwa senkrecht aus der Trägerebene herausgebogen. Diese freien Enden 24 stehen wie Stacheln von dem Träger 12 ab (Fig. 1 und 3).

Der Adsorber 14, der vorzugsweise Aktivkohle aufweist und gegebenfalls vollständig aus Aktivkohle besteht, liegt in flächiger Form, beispielsweise als Adsorberfaserverbund, -gewebe, -gestrick, -gewirk oder -vlies vor.

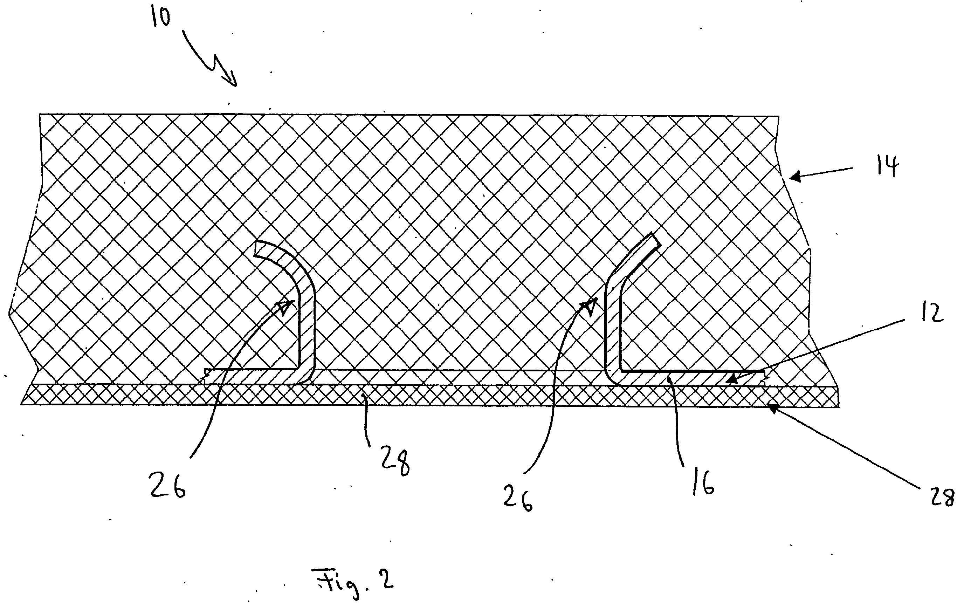

Bei der Herstellung wird der flächige Adsorber 14 auf den Träger 12 aufgelegt, wobei die stachelartigen, freien Enden 24 in das Adsorbermaterial eindringen. Dann wird der Träger 12 zusammen mit dem Adsorber 14, beispielsweise durch Walzen oder Pressen miteinander verpresst, wobei sich die stachelartigen Enden 24 umformen und dann Halteelemente 26 bilden, die sich mit dem Adsorber 14 verkrallen und diesen fest auf dem Träger 12 halten, wie in Fig. 2 dargestellt. Die Abstände zwischen benachbarten Verkrallungspunkten werden in Abstimmung mit der Maschenweite des Streckmetallgitters 16 so gewählt, dass das elektrisch erhitzte Streckmetallgitter 16 einen geeigneten elektrischen Widerstand aufweist und sich über die gesamte Fläche des flächigen Adsorbers 14 eine homogene Desorptionstemperatur einstellt.

Zusätzlich kann das erfindungsgemäße Sorptionsfilter 10 eine das Sorptionsfilter 10 abdeckende Deckschicht 28 auf wenigstens einer Seite des Filters 10 aufweisen, die verhindert, dass eventuell Fasern des Adsorbers 14 durch den Luftstrom aus dem Filter 10 ausgetragen werden. Die Deckschicht 28 kann auf die gleiche Art wie der Adsorber 14 über die Halteelemente 26 gehalten sein. Die Deckschicht 28 kann aus Polyester- oder Glasfasergewebe, flächiges Aktivkohlematerial in Papierform u.ä. bestehen.

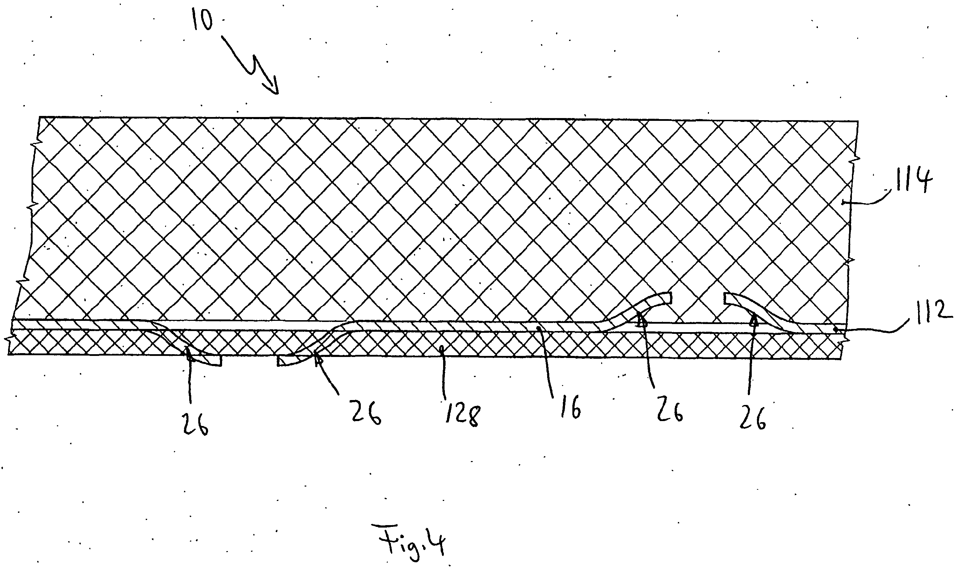

In Fig. 3 ist ein Träger 112 gezeigt, dessen durch Ausstanzen entstandene freie Enden 124 der Gitterstege 118 nach beiden Seiten des Trägers 112 umgebogen sind, so daß auf der einen Seite der Adsorber 114 und auf der anderen Seite die Deckschicht 128 in gleicher Weise gehalten sind (Fig. 4).

Es wäre auch denkbar auf der gleichen Seite des Trägers 12 mehr als eine Schicht von Adsorbern mittels der Halteelemente 26 zu halten. Die Halteelemente müßten dann lang genug sein, um alle Schichten fassen zu können. Ebenso könnten mehrere parallel angeordnete Träger und Adsorber vorgesehen sein, die abwechselnd angeordnet sind und wobei die Träger über die Halteelemente mit dem benachbarten Adsorber verbunden sind.

Das erfindungsgemäße Sorptionsfilter 10 ist als Meterware herstellbar und kann auf eine gewünschte Größe konvektioniert werden. Auch könnte das Sorptionsfilter plissiert sein.

Durch die Anzahl der ausgestanzten Knotenpunkte läßt sich der elektrische Widerstand des Trägers einstellen. Dabei muß einerseits gewährleistet bleiben, dass aus Festigkeitsgründen nicht zuviel Knotenpunkte ausgestanzt werden und andererseits nicht zu wenig ausgestanzt werden, damit genügend Halteelemente zum Halten des Adsorbers gebildet werden können. In einer weiteren Ausführungsform werden nicht ganze Knotenpunkte ausgestanzt, sondern beispielsweise nur einzelne Gitterstege durchtrennt und die durch das Trennen entstandenen zwei freien Enden zu Halteelementen umgeformt.

Weiterhin ist es möglich, bereits beim Herstellungsprozess des Gitters einzelne Stege durchzuschneiden und entsprechend so umzuformen, dass sich ein Gitter mit rechtwinklig abstehenden Stacheln ergibt.

In einer weiteren Ausführungsform können in regelmäßigen Abständen metallische Leiterbahnen aus dem Streckmetallgitter entfernt werden, um dessen elektrischen Widerstand auf einen gewünschen Wert einzustellen.

In einer Ausgestaltung der Erfindung könnte der Träger ein Lochblech, ein Drahtgitter, ein Drahtgetrick oder dergleichen sein. Aus allen diesen Trägern lassen sich durch Ausstanzen und Umformen der durch das Ausstanzen freigewordenen Enden der Gitterstege Halteelemente gemäß der Erfindung herstellen.

Im Einsatz des erfindungsgemäßen Sorptionsfilters kommt das stützende und heizende Streckmetallgitter bevorzugt auf der Luftabströmseite zu liegen.

## Patentansprüche

1. Desorbierbares Sorptionsfilter, insbesondere für eine Heizungs- oder Klimaanlage eines Kraftfahrzeuges, mit einem metallischen Träger (12), der durch Stromfluß aufheizbar ist und mit einem an oder auf dem Träger (12) gelagerten organischem oder anorganischem Adsorber (14), wobei der Adsorber (14) flächig ausgebildet ist und mit dem Träger (12, 112) über an dem Träger (12, 112) angeordnete Halteelemente (26) mechanisch verbunden ist, **dadurch gekennzeichnet, dass** die Halteelemente (26) durch Stanzen und/oder Biegen aus dem Trägermaterial (12, 112) gebildet sind.

2. Sorptionsfilter nach einem der vorhergehenden Ansprüche, **dadurch gekennzeichnet, dass** die Halteelemente (26) als Haken ausgebildet sind.

3. Sorptionsfilter nach einem der vorhergehenden Ansprüche, **dadurch gekennzeichnet, dass** der Träger (12, 112) ein gitterförmiger, metallischer Träger, insbesondere ein Streckmetallgitter (12), ist.

4. Sorptionsfilter nach nach einem der vorhergehenden Ansprüche, **dadurch gekennzeichnet, dass** die Halteelemente (26) durch Ausstanzen von Knotenpunkten (20) und Biegen von durch das Ausstanzen enstandenen freien Enden (24, 124) des Trägermaterials (12, 112) gebildet sind.

5. Sorptionsfilter nach einem der vorhergehenden Ansprüche, **dadurch gekennzeichnet, dass** der Träger ein Lochblech, ein Drahtgitter, ein Drahtgestrick oder dergleichen ist.

6. Sorptionsfilter nach einem der vorhergehenden Ansprüche, **dadurch gekennzeichnet, dass** der Adsorber (14) als Adsorberfaserverbund, beispielsweise Adsorbergewebe, -gestrick oder -vlies, ausgebildet ist.

7. Sorptionsfilter nach einem der vorhergehenden Ansprüche, **dadurch gekennzeichnet, dass** der Adsorber Aktivkohle aufweist.

8. Sorptionsfilter nach einem der vorhergehenden Ansprüche, **dadurch gekennzeichnet, dass** das Filter mit seinem Träger und Adsorber plissiert ist.

9. Sorptionsfilter nach einem der vorhergehenden Ansprüche, **dadurch gekennzeichnet, dass** beidseits des Trägers jeweils eine Adsorberschicht vorgesehen ist.

10. Sorptionsfilter nach einem der vorhergehenden Ansprüche, **dadurch gekennzeichnet, dass** auf dem Adsorber eine ebenfalls mechanisch mit dem Träger (12, 112) verbundene Deckschicht (28, 128) vorgesehen ist, um abgelöste Fasern des Adsorbers (14, 114) zurückzuhalten.

11. Sorptionsfilter nach einem der vorhergehenden Ansprüche, **dadurch gekennzeichnet, dass** er aus mehreren, abwechselnd angeordneten Trägern und Adsorberschichten besteht.

12. Verfahren zur Herstellung eines Sorptionsfilters nach einem der vorhergehenden Ansprüche, **gekennzeichnet durch** folgende Verfahrensschritte:
- Herstellen des Adsorbers (14), beispielsweise eines Adsorberfaserverbundes, Aktivkohle-Gewebes oder eines Aktivkohle enthaltenden Vlieses oder anderem kohlenstoffhaltigem faserigem Grundmaterial, das **durch** Verkokung und Aktivierung von textilen Garnen, Schnüren, Dochten, Seilen oder anderen Faserbündeln z.B. aus Viskose erhalten ist,
- Herstellen des metallischen Trägers (12, 112), der **durch** Stromfluss aufheizbar ist, mit den Halteelementen (26) **durch** Ausstanzen von Knotenpunkten (20) und Umformen von **durch** das Ausstanzen entstandener freier Enden (24, 124) des Trägermaterials (12, 112),
- Auflegen des Adsorbers (20) auf den Träger (12, 112) und gegebenenfalls Unterlegen einer Schutzschicht, z.B. eines Schutzvlieses, unter den Träger,
- Verbinden von Träger (12, 112) und Adsorber (14, 114) **durch** Verformen der Haltelemente (26).

13. Verfahren nach Anspruch 12, **dadurch gekennzeichnet, dass** die Halteelemente (26) durch Walzen oder Pressen verformt werden.

## Claims

1. Desorbable sorption filter, in particular designed for a heating or air conditioning system of a motor vehicle, with a metallic carrier (12) heated by current flow and with an organic or inorganic adsorber (14) supported on the carrier (12), wherein the adsorber (14) is designed two-dimensional and mechanically connected to the carrier (12, 112) by retaining elements (26) located on the carrier (12, 112), **characterised in that** the retaining elements (26) are produced by punching and/or bending from the carrier material (12, 112).

2. Sorption filter according to any of the preceding claims, **characterised in that** the retaining elements (26) are designed as hooks.

3. Sorption filter according to any of the preceding claims, **characterised in that** the carrier (12; 112) is a mesh-like metallic carrier, in particular an expanded metal mesh (12).

4. Sorption filter according to any of the preceding claims, **characterised in that** the retaining elements (26) are produced by punching out panel joints (20) and bending the free ends (24, 124) of the carrier material (12, 112) produced by punching out.

5. Sorption filter according to any of the preceding claims, **characterised in that** the carrier is a perforated plate, a wire mesh, a knitted wire structure or the like.

6. Sorption filter according to any of the preceding claims, **characterised in that** the adsorber (14) is designed as an adsorber fibre composite, such as an adsorber woven or knitted fabric or non-woven fabric.

7. Sorption filter according to any of the preceding claims, **characterised in that** the adsorber includes activated carbon.

8. Sorption filter according to any of the preceding claims, **characterised in that** the filter with its carrier and adsorber is pleated.

9. Sorption filter according to any of the preceding claims, **characterised in that** an adsorber layer is provided on each side of the carrier..

10. Sorption filter according to any of the preceding claims, **characterised in that** a cover layer (28, 128) likewise mechanically connected to the carrier (12, 112) is provided on the adsorber to retain loosened fibres of the adsorber (14, 114).

11. Sorption filter according to any of the preceding claims, **characterised in that** is comprises a plurality of alternating carriers and adsorber layers.

12. Method for the production of a sorption filter according to any of the preceding claims, **characterised by** the following steps:
- Production of the adsorber (14), for example of an adsorber fibre composite, an activated carbon fabric or a non-woven fabric containing activated carbon, or of another fibrous carbon-containing base material obtained by carbonisation of textile yarns, cords, wicks, ropes or other bunched fibres, for example made of viscose;
- Production of the metallic carrier (12, 112) heated by current flow with its retaining elements (26) by punching out panel joints (20) and shaping the free ends (24, 124) of the carrier material (12, 112) produced by punching out;
- Placing the adsorber (20) on the carrier (12, 112) and possibly placing a protective layer, such as a protective non-woven fabric, under the carrier;
- Joining the carrier (12, 112) to the adsorber (14, 114) by deforming the retaining elements (26).

13. Method according to claim 12, **characterised in that** the retaining elements (26) are deformed by rolling or press-forming.

## Revendications

1. Filtre à sorption désorbable, en particulier pour un système de chauffage ou de climatisation d'un véhicule automobile, comprenant un support métallique (12) qui peut être chauffé par un flux de courant et comprenant un adsorbant (14) organique ou anorganique placé contre ou sur le support (12), où l'adsorbant (14) est conçu de manière plane et est relié mécaniquement au support (12, 112) par des éléments de retenue (26) disposés sur le support (12, 112),
**caractérisé en ce que** les éléments de retenue (26) sont formés par découpe et/ou par courbure, à partir du matériau support (12, 112).

2. Filtre à sorption selon la revendication précédente, **caractérisé en ce que** les éléments de retenue (26) sont conçus comme des crochets.

3. Filtre à sorption selon l'une ou l'autre des revendications précédentes, **caractérisé en ce que** le support (12, 112) est un support métallique en forme de grille, en particulier une grille (12) en métal étiré.

4. Filtre à sorption selon l'une quelconque des revendications précédentes, **caractérisé en ce que** les éléments de retenue (26) sont formés par découpe à la matrice de points de jonction (20) et par courbure d'extrémités libres (24, 124) du matériau support (12, 112) obtenues par la découpe à la matrice.

5. Filtre à sorption selon l'une quelconque des revendications précédentes, **caractérisé en ce que** le support est une tôle perforée, un treillis métallique, un maillage métallique ou un support de type analogue.

6. Filtre à sorption selon l'une quelconque des revendications précédentes, **caractérisé en ce que** l'adsorbant (14) est conçu comme un composite adsorbant renforcé par des fibres, par exemple un tissu adsorbant, un maillage adsorbant ou un voile adsorbant.

7. Filtre à sorption selon l'une quelconque des revendications précédentes, **caractérisé en ce que** l'adsorbant présente un charbon actif.

8. Filtre à sorption selon l'une quelconque des revendications précédentes, **caractérisé en ce que** le filtre est plissé avec son support et son adsorbant.

9. Filtre à sorption selon l'une quelconque des revendications précédentes, **caractérisé en ce qu'**il est prévu, des deux côtés du support, à chaque fois une couche d'adsorbant.

10. Filtre à sorption selon l'une quelconque des revendications précédentes, **caractérisé en ce qu'**il est prévu, sur l'adsorbant, une couche de recouvrement (28, 128) également reliée mécaniquement au support (12, 112), pour retenir des fibres détachées de l'adsorbant (14, 114).

11. Filtre à sorption selon l'une quelconque des revendications précédentes, **caractérisé en ce qu'**il se compose de plusieurs supports et de plusieurs couches d'adsorbant disposés de façon alternée.

12. Procédé de fabrication d'un filtre à sorption selon l'une quelconque des revendications précédentes, **caractérisé par** les étapes de procédé suivantes qui consistent :
- à fabriquer l'adsorbant (14), par exemple un composite adsorbant renforcé par des fibres, un tissu à charbon actif ou un voile contenant un charbon actif ou bien un autre matériau de base fibreux et carboné qui est obtenu par carbonisation et par activation de fils textiles, de cordes, de mèches, de cordages ou d'autres faisceaux de fibres, par exemple de viscose,
- à fabriquer le support métallique (12, 112) qui peut être chauffé par un flux de courant, comprenant les éléments de retenue (26) formés par découpe à la matrice de points de jonction (20) et par formage d'extrémités libres (24, 124) du matériau support (12, 112) obtenues par la découpe à la matrice,
- à appliquer l'adsorbant (14, 114) sur le support (12, 112) et, le cas échéant, à appliquer, sous le support, une couche de protection, par exemple un voile de protection,
- à assembler le support (12, 112) et l'adsorbant (14, 114) par déformation des éléments de retenue (26).

13. Procédé selon la revendication 12, **caractérisé en ce que** les éléments de retenue (26) sont déformés par laminage ou par compression.
